Europäisches Patentamt

European Patent Office

Office européen des brevets

(19)

(11) **EP 0 797 506 B1**

(12) **FASCICULE DE BREVET EUROPEEN**

(45) Date de publication et mention
de la délivrance du brevet:
**17.02.1999 Bulletin 1999/07**

(21) Numéro de dépôt: **95942240.3**

(22) Date de dépôt: **11.12.1995**

(51) Int. Cl.$^6$: **B32B 7/12**, C09J 123/28,
C09J 151/08, C09J 167/04

(86) Numéro de dépôt international:
**PCT/FR95/01641**

(87) Numéro de publication internationale:
**WO 96/18500 (20.06.1996 Gazette 1996/28)**

(54) **LIANT D'ADHESION DE POLYOLEFINES ET DE POLYMERES FLUORES, PROCEDE DE FABRICATION DE MATERIAU COMPOSITE LE METTANT EN OEUVRE ET TUBES OU RESERVOIRS AINSI OBTENUS**

KLEBSTOFF ZUM VERBINDEN VON POLYOLEFINEN MIT FLUORHALTIGEN POLYMEREN, VERFAHREN ZUR HERSTELLUNG EINES VERBUNDMATERIALS UND SO HERSTELLBARE ROHRE UND BEHÄLTER

POLYOLEFIN/FLUOROPOLYMER ADHESION BINDER, METHOD USING SAME FOR MAKING A COMPOSITE MATERIAL, TUBES AND CONTAINERS OBTAINABLE THEREBY

(84) Etats contractants désignés:
**BE DE FR GB IT**

(30) Priorité: **14.12.1994 FR 9415052**

(43) Date de publication de la demande:
**01.10.1997 Bulletin 1997/40**

(73) Titulaire: **ELF ATOCHEM S.A.**
**92800 Puteaux, Hauts-de-Seine (FR)**

(72) Inventeurs:
• **BUSSI, Philippe**
**F-27300 Bernay (FR)**
• **RENOUARD, Philippe**
**F-27800 Brionne (FR)**

(56) Documents cités:
**GB-A- 2 099 436**            **US-A- 3 576 778**

• **DATABASE WPI Derwent Publications Ltd., London, GB; AN 73-81084u & JP,A,73 043 180 (TOYO SPINNING)**

Printed by Xerox (UK) Business Services
2.16.7/3.6

**Description**

La présente invention a pour objet un liant d'adhésion pour polyoléfines et polymères fluorés dont l'adhérence mutuelle est très réduite, voire nulle en l'absence de liant.

Les polyoléfines thermoplastiques, et notamment le polyéthylène (PE), présentent de nombreuses applications dues à leur mise en oeuvre aisée, leur faible coût et leurs bonnes propriétés mécaniques ; à titre d'exemple d'application, on peut citer des objets moulés, extrudés, soufflés tels que plaques, tubes, corps creux, films, etc. Cependant, leur imperméabilité aux solvants, notamment aux hydrocarbures et aux essences, n'est pas excellente.

Les polyméres fluorés sont connus pour leur bonne tenue thermique (température de fusion supérieure à 120 °C), leur résistance chimique, notamment aux solvants, résistance aux intempéries et aux rayonnements, U.V. par exemple, leur imperméabilité aux gaz et aux liquides, leur qualité d'isolants électriques. Cependant, leur adhérence réduite voire nulle sur de nombreux polymères tels que par exemple polyamides, polyoléfines, polystyréniques est connue et limite leur utilisation pour la réalisation de matériaux composites ou nécessite l'emploi de liant d'adhésion entre les polymères que l'on veut faire adhérer.

Des matériaux composites polyoléfine/polymère fluoré seraient une solution économique et performante pour la réalisation d'objets en contact direct avec des produits chimiques, solvants, hydrocarbures, huiles et essences, car de telles structures feraient usage des remarquables propriétés barrière des polymères fluorés. Ainsi, on peut envisager des tubes composites pour le transport d'essences ou des bidons composites pour le stockage de produits chimiques. Pour un matériau composite multicouche comprenant au moins 2 couches adjacentes de polymères qui n'adhèrent pas, le décollement des couches durant l'étape de mise en forme (ou durant la durée de vie de l'objet) peut entraîner une baisse des propriétés mécaniques de la structures multicouche et laisser un passage aux produits chimiques dont on veut pourtant empêcher la perméation à travers la structure ainsi que la condensation éventuelle des gaz à l'interface avec pour conséquence inéluctable la déformation irréversible du matériau.

Un liant d'adhésion est également utile pour compenser les différences de retrait des différents matériaux de la structure multicouche.

On connait dans la littérature des compostions voisines des compositions de la présente invention.

La demande de brevet GB 2 099 436 A décrit une composition comprenant (A) 100 parties en poids de polycaprolactone et (B-2) 10 à 70 parties en poids d'une polyoléfine chlorée. Le rapport en poids de la polycaprolactone / polyoléfine chlorée est donc de 10 à 1,43. Cette composition est utile comme matériau de moulage et comme adhésif fusible à chaud ("hot melt adhesive").

La demande de brevet JP 48-43180 décrit une composition adhésive comprenant d'une part, 30 à 99 parties en poids d'un copolyester linéaire à base d'éthylène glycol contenant au moins 15 mol % d'unités issues de l'acide téréphtalique et le complément d'unités dicarboxyliques issues d'autres acides dibasiques tels que les acides phtalique, adipique et sébacique et, d'autre part, 70 à 1 parties en poids d'un polypropylène isotactique chloré.

Le brevet US 3 576 778 a trait à un adhésif à chaud, en solution dans un ou plusieurs solvants organiques, et comprenant en mélange :

        (A) d'environ 55 à 80 % en poids de polycaprolactone
        (B) d'environ 5 à 35 % en poids d'une paraffine chlorée ayant un taux de chlore d'au moins 60 % en poids, et
        (C) d'environ 5 à 35 % en poids d'un ou plusieurs copolymères statistiques de chlorure de vinyle.

Le liant d'adhésion des polyoléfines à des polyméres fluorés, objet de la présente demande, est définie à la revendication 1.

La masse moléculaire moyenne en poids $\overline{M_w}$ des polyesters aliphatiques est en général comprise entre 10000 et 150000 et, de préférence entre 30000 et 90000.

La synthèse des polyesters aliphatiques $-(-O-R_1-CO-)_n-$ et $-(-O-R_2-O-CO-R_3-CO)_n-$ est par exemple décrite dans l'ouvrage : Encyclopedia of Polymer Science and Engineering (EPSE), 2nd Edition, Volume 12, Rubrique Polyester, édité par Wiley Interscience. Les polyesters dérivant d'esters cycliques sont particulièrement décrits aux pages 36-41.

De préférence, le polyester aliphatique est la polycaprolactone (PCL).

Le polyester aliphatique peut être autré choisi parmi les polylactones telles que la polycaprolactone ou la polypivalolactone ou la polyenantholactone ou le polycaprilolactone.

On peut donc greffer sur le polyester aliphatique au moins un monomère choisi parmi :

- les acides carboxyliques insaturés, leurs sels, leurs esters, leurs anhydrides;
- les produits insaturés portant des fonctions époxydées;
- les esters vinyliques;
- le styrène.

2

A titre d'exemple, on peut citer :

- l'acide (méth)acrylique, l'acide fumarique, l'acide mésaconique;
- les (méth)acrylates d'alkyles tels que le méthacrylate de méthyle, l'acrylate de butyle, l'acrylate de tertiobutyle ou l'acrylate d'hydroxyéthyle;
- l'anhydride citraconique, l'anhydride itaconique, l'anhydride tétrahydrophtalique, l'anhydride méthyl-2 maléique, l'anhydride diméthyl-2,3 maléique et l'anhydride maléique;
- les esters et les éthers de glycidyle aliphatiques tels que, le (méth)acrylate de glycidyle GMA, le maléate de glycidyle, l'itaconate de glycidyle, le vinylglycidyléther, l'alkylglycidyléther.

On peut citer aussi les esters et les éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo (2,2,1)-5-heptène-2,3 diglycidyl dicarboxylate, le vinylcyclohexène monoxyde, le METHB (méthacrylate d'époxy-tétrahydrobenzyle);

- l'acétate de vinyle.

Le greffage peut s'effectuer en extrudeuse à l'état fondu en présence d'initiateurs radicalaires.

La quantité de monomère greffé est en général inférieure à 15 % en poids du polyester aliphatique non greffé.

Il est bien connu que les polyesters aliphatiques et en particulier la polycaprolactone est sensible à l'attaque de radicaux initiés par décomposition thermique d'initiateurs appropriés comme des peroxydes. En l'absence de tout autre réactif, cette attaque radicalaire conduit à la modification de l'architecture moléculaire du produit de départ par branchement les unes avec les autres des chaînes du polymère : cette modification est appelée branchement long et, si la quantité de radicaux produits est suffisante, elle conduit à la réticulation du polymère.

De plus, les polyesters aliphatiques tels que les polylactones, obtenues généralement par des réactions de polycondensation, présentent des chaînes moléculaires linéaires et, de ce fait, au-delà du point de fusion de leurs zones cristallines, une viscosité de fusion très faible, généralement incompatible avec une bonne manipulabilité du produit en sortie, par exemple, d'une extrudeuse. De plus, cette faible viscosité de fusion peut être préjudiciable à une bonne compatibilité ou une bonne miscibilité de ce produit même avec des polymères réputés miscibles ou compatibles et, de ce fait, être préjudiciable à l'action de compatibilisation désirée des mélanges de polymères. Le greffage à l'état fondu, en extrudeuse, par l'intermédiaire d'initiateurs radicalaires, permet, du fait des réactions de branchement parallèles à la réaction de greffage, d'augmenter considérablement la viscosité du polymère et de la rendre plus apte au mélangeage ultérieur.

Par exemple, le greffage à l'état fondu, en extrudeuse, de la poly($\epsilon$-caprolactone), se déroule dans une extrudeuse bi-vis corotative présentant un profil de températures comme décrit dans le tableau ci-dessous:

| Zone d'introduction de la PCL | Zone d'injection des réactifs | ZONES DE REACTION | | Zone de dégazage | | Fillère de sortie |
|---|---|---|---|---|---|---|
| 20°C | 120°C | 210°C | 210°C | 220°C | 220°C | 220°C |

La zone d'introduction de la polycaprolactone est maintenue basse ( 20°C ) du fait du bas point de fusion du produit ( 60°C ) afin d'éviter des bouchages à la goulotte d'alimentation et un bon transport du produit.

La vitesse de vis est typiquement de 200 tours/minutes pour un débit d'extrusion d'environ 10 kg/h.

Les produits volatils de la réaction sont éliminés en zone de dégazage sous un vide maximum.

La température des zones de réaction est adaptée à l'initiateur radicalaire utilisé et au temps de séjour des réactifs de telle façon que tout l'initiateur radicalaire se soit décomposé au moins à 99,9%. Elles sont typiquement de 210°C pour des initiateurs comme le DHBP ( 2,5-diméthyl 2,5(ditertiobutylperoxy)hexane ) ou le DICUP (peroxyde de dicumyle), de 190°C pour le TMCH (1,1-di(terbutylperoxy)-3,3,5-triméthylcyclohexane) ou de 175°C pour le peroxyde de benzoyle.

Pour greffer les polyesters aliphatiques, les initiateurs radicalaires utilisables sont nombreux, on peut citer, par exemple, les peroxydes de diacyle, les peroxydes dérivés de composés cétoniques, les peroxydicarbonates, les peroxyesters, les peroxydes de dialkyle, les peroxydes de dérivés organosulfonyles, les peroxycétales.

L'initiateur radicalaire est usuellement dilué dans un solvant (par exemple le trichlorobenzène) mais il peut être utilisé tel que s'il est liquide (par exemple le DHBP). Il est généralement injecté par l'intermédiaire d'une pompe doseuse dans le polyester aliphatique fondu à une température suffisamment basse pour que l'initiateur puisse se mélanger convenablement dans la masse fondue avant de commencer à se décomposer et à réagir. Il peut également être introduit en mélange avec une poudre d'un polymère approprié au même endroit que les granulés du polyester aliphatique par l'intermédiaire d'un doseur approprié.

Les monomères sont généralement injectés dans la masse fondue par l'intermédiaire d'une pompe doseuse, s'ils sont liquides, dans la même zone d'injection que celle de l'initiateur radicalaire. Parfois, le monomère peut servir de solvant à l'initiateur radicalaire.

Lorsque les monomères sont sous forme solide, ils sont généralement introduits au même endroit que les granulés de polyester aliphatique par l'intermédiaire d'un doseur approprié.

Les polyoléfines chlorées à employer selon l'invention contiennent au moins 10 % en masse d'atomes de chlore par rapport à la masse totale de la polyoléfine chlorée.

Leur masse moléculaire moyenne en poids $\overline{M_w}$ dépend de celle de la polyoléfine non halogénée. Elle est en général comprise entre 10.000 et 200.000.

Parmi les polyoléfines chlorées, on peut tout particulièrement citer les polyéthylène (PE) et polypropylène (PP) chlorés, et notamment celles dont le taux de chlore est compris entre 10 et 50 % en poids.

La chloration du PE est par exemple décrite dans EPSE, Volume 6, pages 495-511.

Lorsque le liant est à base de PE et/ou de PP chloré et de PCL, le rapport massique PCL/PE et/ou de PP chloré est compris de préférence entre 0,10 et 0,45.

En sus de polyester(s) aliphatique(s) et de polyoléfine(s) halogénée(s), le liant d'adhésion peut inclure d'autres polymères présents en quantité minoritaire dans le mélange, afin de modifier les propriétés rhéologiques, ou mécaniques, ou de résistance chimique, ou de tenue thermique du liant.

Par quantité minoritaire, on entend une quantité d'un ou plusieurs autres polymères telle que le rapport massique de cette quantité à la masse de polyester(s) aliphatique(s) et de polyoléfine(s) chlorée(s) soit inférieure à 1 et de préférence inférieure à 0,25.

Le liant d'adhésion peut être également formulé pour contenir des additifs comme par exemple des stabilisants, des agents ignifugeants, des charges renforçantes ou non, des pigments, des plastifiants ou autres. Un descriptif non exhaustif des additifs utilisables par l'homme de l'art est disponible dans le Plastics Compounding Redbook (ISSN 0148-9119) édité chaque année par la revue technique Plastics Compounding.

Les liants peuvent être obtenus par mélange à l'état fondu des différents constituants par exemple dans une extrudeuse, un mélangeur ou un malaxeur. On préfère soumettre les constituants à fort cisaillement durant le mélange, afin d'assurer un mélange homogène. Lors de l'opération de mélange, on choisit une température permettant d'assurer la fusion du polymère présentant le point de fusion le plus élevé, mais en dessous de la température où la dégradation thermique du liant devient excessive. L'opération du mélange des éléments constitutifs du liant peut être réalisée par exemple dans une extrudeuse de granulation, afin de pouvoir disposer de granulés utilisables dans d'autres machines de transformation des plastiques. Le liant peut être également obtenu in situ dans les extrudeuses des machines de transformation permettant d'obtenir des structures composites muiticouches, par exemple selon le procédé de coextrusion, ou de coextrusion-soufflage.

La présente demande concerne également l'utilisation des liants d'adhésion définis plus haut pour la réalisation de matériaux composites comprenant au moins l'association polyoléfine/liant/polymére fluoré, et formant des objets, tels que films, tubes, flacons, réservoirs multicouches destinés notamment à être en contact avec des produits chimiques, solvants, hydrocarbures, essences. On peut utiliser ces matériaux composities pour le Transport et/ou le stockage d'hydrocarbures. Les matériaux composites multicouches sont généralement obtenus par coextrusion, mais on peut aussi coextruder une structure polyoléfine/liant (ou polymère fluoré/liant) que l'on viendra ensuite recouvrir d'une couche de polymère fluoré (ou de polyoléfine).

Les matériaux composites multicouches utilisant les liants selon l'invention présentent le motif élémentaire tricouche polyoléfine/liant/polymère fluoré (structures à trois couches) mais ce motif peut être répété pour donner par exemple la structure polyoléfine/liant/polymère fluoré/liant/polyoléfine (structures à cinq couches).

Une ou plusieurs des couches de ces structures multicouches peut être constituée, totalement ou en partie, de matériaux rebroyés ou recycles, c'est-à-dire de matériaux obtenus en broyant les objets multicouches vierges ou les chutes issues de la production de ces objets.

Par polyoléfines sur lesquelles on fait adhérer le liant défini plus haut, on entend les polyméres qui dérivent d'au moins 50 % en poids de motifs issus d'hydrocarbures aliphatiques insaturés de formule $C_nH_{2n}$ appelés oléfines et plus particulièrement d'$\alpha$-oléfines. A titre d'exemple, on peut citer

* les polyoléfines thermoplastiques et plus particulièrement les grades de polyéthyléne (PE) tels que HD, LLD, VLD, ULD, UHMW, les différents polypropylènes(PP) homo- et copolymères, statistiques ou non,
* les élastomères thermoplastiques polyoléfiniques (TPO) qui sont des mélanges physiques réalisés à partir de polyoléfines on distingue ceux qui contiennent plus de 60% de polypropylène et ceux dont la phase élastomère est prépondérante (plus de 70 %), celle-ci pouvant être réticulée ou non ; on citera en particulier les EPR, EPDM,

\* les copolymères contenant plus de 50 % en poids d'éthylène tels que les copolymères et notamment terpolymères dérivant d'éthylène et d'acétate(s) d'alkyle(s), d'éthylène et de (meth)acrylate(s) d'alkyle(s),

\* ainsi que tous les produits précédents greffés avec par exemple au moins un anhydride d'acide dicarboxylique insaturé tel que l'anhydride maléique, avec des silanes, des composés comprenant des groupement époxy tels que le méthacrylate de glycidyle.

Par polymère fluoré sur lequel on fait adhérer le liant défini plus haut, on désigne tous les polymères contenant au moins 85 % molaires, et, de préférence, au moins 90 % molaires d'unités monomériques dérivées du fluorure de vinyle et/ou du fluorure de vinylidène. Les polymères de fluorure de vinyle et/ou ou de vinylidène qui conviennent à la réalisation des structures multicouches selon l'invention comprennent donc aussi bien des homopolymères de fluorure de vinyle et du fluorure de vinylidène, que les copolymères du fluorure de vinyle ou de vinylidène contenant des unités monomériques dérivées d'un ou de plusieurs comonomères. On donne la préférence aux polymères contenant au moins 90 % molaires d'unités monomériques dérivées respectivement du fluorure de vinyle ou du fluorure de vinylidène, le complément éventuel étant constitué de préférence d'unités monomériques dérivées d'autres oléfines fluorées, tels que le fluorure de vinylidène, le fluorure de vinyle, le trifluoréthylène, le chlorotrifluoréthylène et l'hexafluoropropylène. Des polymères fluorés particulièrement préférés sont l'homopolymère du fluorure de vinyle et, plus particulièrement encore l'homopolymère du fluorure de vinylidène.

Par polymére fluoré on entend également des mélanges d'au moins 50 % en volume, de préférence 70 % en volume, avec les autres polymères.

On ne sortirait pas du cadre de l'invention si ces polymères fluorés et oléfiniques contenaient des plastifiants, charges, pigments, stabilisants et/ou des renforçants choc.

## Exemples 1 à 45 liants d'adhésion et matériaux multicouches les mettant en oeuvre

A) Matériaux utilisés :

Le PVDF est un homopolymère de VF2 de fluidité 8 g/10 min à 230°C sous 5 kg (norme ISO 1133) (KYNAR® 4000HD).

La polyoléfine PE1 est un PEHD de densité 0,951 et de fluidité 2 g/10 min à 190°C sous 2,16 kg (norme ISO 1133)(Lacqtène® 2020 SN 51).

La polyoléfine PE2 est un PEHD de densité 0,952 et de fluidité 0,3 g/10 min à 190°C sous 2,16 kg (norme ISO 1133)(Lacqtène® 2003 SN 53).

La poly($\varepsilon$-caprolactone) PCL a une viscosité de fusion à 190 °C supérieure à 1000 Pa.s à un cisaillement de 10 s$^{-1}$ et supérieure à 300 Pa.s à un cisaillement de 1000 s$^{-1}$(CAPA® 680).

La polyoléfine chlorée (PECl1) est un polyéthyléne chloré de densité 1,20 et contenant 40 % en masse de chlore (TYRIN® BH 9000). Cette polyoléfine est caractérisée par une viscosité de fusion de 1700 Pa.s à un cisaillement de 145 s$^{-1}$ à 190°C.

La polyoléfine chlorée (PECl2) est un polyéthyléne chloré de densité 1,10 et contenant 25 % en masse de chlore(TYRIN® CM 674). Cette polyoléfine est caractérisée par une viscosité de fusion de 1250 Pa.s à un cisaillement de 145 s$^{-1}$ à 190°C.

La polyoléfine chlorée (PPCl1) est un polypropylène chloré de densité 1,12 contenant 26 % en masse de chlore et de température de fusion 100 °C (HARDLEN® 13 LP).

La polyoléfine chlorée (PPCl2) est un polypropylène chloré de densité 1,17 et contenant 34 % en masse de chlore et de température de fusion 85 °C (HARDLEN® 17 LP).

La polyoléfine PP est un copolymère bloc éthylène, propylène à 8 % en masse d'éthylène et d'indice de fluidité 12 g/10 min à 230°C sous 2,16 kg (norme ISO 1133)(PP 3120 MR 5 commercialisé par la société Appryl).

La polyoléfine EPDM est un terpolymère éthylène-propylène-diène formulé avec du noir de carbone, une huile de paraffine et un système de vulcanisation (des insaturations diéniques) au soufre contenant 58 % en masse d'éthylène et 9 % de diène. Sa viscosité Mooney ML (1+4) à 125°C est de 36 (VISTALON® 6630).

La poly($\varepsilon$-caprolactone) greffée (PCLgGMA) correspond à la PCL décrite ci-dessus dont le taux de GMA est égal 1,4 % de la masse totale de polymère greffé.

B) Préparation des films de liant :

Les liants sont obtenus par mélange sur une extrudeuse double vis contrarotative permettant l'obtention d'un fort taux de cisaillement. Le jonc issu de la filière est refroidi à l'air libre avant d'être granulé. Le temps de séjour dans l'extrudeuse est de l'ordre de deux minutes. Les granulés issus de l'extrusion sont ensuite pressés de façon à réaliser des films de liant d'épaisseur comprise entre 100 à 200 $\mu$m. Cette opération est réalisée sur une presse de laboratoire dans les conditions suivantes :

- les granulés sont placés 1 min 30s sous la presse chaude réglée à la pression minimale et à une température suffisante pour assurer la fusion du polymère,
- la pression est augmentée de façon à éliminer les traces d'air au sein du film et maintenue durant 2 min 30 s,
- enfin, les films ainsi formés sont refroidis sous presse froide,
- l'épaisseur des films obtenus est de l'ordre de 100 à 200 μm.

C) Préparation des structures multicouches :

Des films tricouches polymère A / liant / polymère A où le polymère A = PE, PP, EPR, EPDM, PVDF sont ensuite préparés sur une presse chauffante afin de souder les films plastiques entre eux. L'assemblage est soumis à une pression de 200 kPa et à une température de 220°C durant 1 minute. Ces structures symétriques permettent d'assurer que l'on mesure bien l'adhésion polymère A / liant.

D) Test de pelage :

24 heures après la préparation des échantillons multicouches, on effectue les tests de pelage sur les structures multicouches décrites ci-dessus sur un dynamomètre à une vitesse de 200 mm/min et pour un angle de pelage de 180°. L'adhésion mesurée est exprimée en g/cm. On utilise la correspondance suivante :

| | |
|---|---|
| Adhésion interfaciale > 10000 g/cm (structure indélaminable) | ++++ |
| 6000 g/cm < adhésion interfaciale < 10000 g/cm | +++ |
| 3000 g/cm < adhésion interfaciale < 6000 g/cm | ++ |
| 1000 g/cm < adhésion interfaciale < 3000 g/cm | + |
| Adhésion interfaciale < 1000 g/cm | 0 |

Exemples 1 à 7 liant à base de PECl1 et de PCL - adhésion sur PE & PVDF

| Ex. | Composition du liant (en masse) | | Adhésion côté PE1 | | Adhésion côté PVDF | |
|---|---|---|---|---|---|---|
| | PECl 1 | PCL | 1 passage sur extrudeuse bivis | 2 passages sur extrudeuse bivis | 1 passage sur extrudeuse bivis | 2 passages sur extrudeuse bivis |
| 1* | 0 | 100 | 0 | 0 | ++++ | ++++ |
| 2 | 50 | 50 | + | + | ++++ | ++++ |
| 3 | 60 | 40 | ++ | ++ | ++++ | ++++ |
| 4 | 70 | 30 | ++ | ++ | ++++ | ++++ |
| 5 | 80 | 20 | ++ | ++ | +++ | +++ |
| 6 | 90 | 10 | ++ | ++ | + | + |
| 7* | 100 | 0 | 0 | 0 | 0 | 0 |

* Examples comparatifs

Exemples 8 à 14 liant à base de PECl2 et de PCL- adhésion sur PE & PVDF

| Ex. | Composition du liant | | Adhésion côté PE1 | | Adhésion côté PVDF | |
|---|---|---|---|---|---|---|
| | PECl2 | PCL | 1 passage sur extrudeuse bivis | 2 passages sur extrudeuse bivis | 1 passage sur extrudeuse bivis | 2 passages sur extrudeuse bivis |
| 8 | 0 | 100 | 0 | 0 | ++++ | ++++ |
| 9 | 50 | 50 | 0 | 0 | ++++ | ++++ |
| 10 | 60 | 40 | ++ | ++ | ++++ | ++++ |
| 11 | 70 | 30 | ++ | ++ | ++++ | ++++ |
| 12 | 80 | 20 | +++ | ++++ | ++++ | ++++ |
| 13 | 90 | 10 | ++++ | ++++ | ++++ | ++++ |
| 14 | 100 | 0 | ++++ | ++++ | 0 | 0 |

Exemples 15 à 22 (comparatifs) liant à base de PE2 / PCL- adhésion sur PE & PVDF

| Ex. | Composition du liant | | Adhésion côté PE1 | | Adhésion côté PVDF | |
|---|---|---|---|---|---|---|
| | PE2 | PCL | 1 passage sur extrudeuse bivis | 3 passages sur extrudeuse bivis | 1 passage sur extrudeuse bivis | 3 passages sur extrudeuse bivis |
| 15 | 0 | 100 | 0 | 0 | ++++ | ++++ |
| 16 | 10 | 90 | 0 | 0 | ++++ | ++++ |
| 17 | 20 | 80 | 0 | 0 | ++++ | ++++ |
| 18 | 30 | 70 | 0 | 0 | ++++ | ++++ |
| 19 | 70 | 30 | ++++ | ++++ | 0 | 0 |
| 20 | 80 | 20 | ++++ | ++++ | 0 | 0 |
| 21 | 90 | 10 | ++++ | ++++ | 0 | 0 |
| 22 | 100 | 0 | ++++ | ++++ | 0 | 0 |

Exemples 23 & 24 liant à base de PECl2 / PCL- adhésion sur PP & PVDF

| Exemple | Composition du liant | | Adhésion sur PP | Adhésion sur PVDF |
|---|---|---|---|---|
| | PECl2 | PCL | 1 passage sur extrudeuse bivis | |
| 23 | 50 | 50 | ++ | ++++ |
| 24 | 60 | 40 | ++ | ++++ |

Exemples 25 à 29 liant à base de PECl2 / PCL- adhésion sur EPDM & PVDF

| Exemple | Composition | du liant | Adhésion côté EPDM | Adhésion côté PVDF |
|---|---|---|---|---|
| | PECl2 | PCL | 2 passages sur extrudeuse bivis | 2 passage sur extrudeuse bivis |
| 25* | 0 | 100 | 0 | ++++ |
| 26 | 60 | 40 | + | ++++ |
| 27 | 70 | 30 | + | ++++ |
| 28 | 80 | 20 | +++ | ++++ |
| 29* | 100 | 0 | 0 | 0 |

* Examples comparetifs

Exemples 30 à 34 liant à base de PECl1 / PCL - adhésion sur EPDM & PVDF

| Exemple | Composition du liant | | Adhésion côté EPDM | Adhésion côté PVDF |
|---|---|---|---|---|
| | PECl1 | PCL | 2 passages sur extrudeuse bivis | 2 passage sur extrudeuse bivis |
| 30* | 0 | 100 | 0 | ++++ |
| 31 | 60 | 40 | + | ++++ |
| 32 | 70 | 30 | ++ | ++++ |
| 33 | 80 | 20 | ++ | +++ |
| 34* | 100 | 0 | 0 | 0 |

* Exemples comperetifs .

Exemple 35 liant à base de PPCl1 et de PCL - adhésion sur PP & PVDF :

| Ex. | Composition du liant | | Adhésion sur PP | | Adhésion sur PVDF | |
|---|---|---|---|---|---|---|
| | PPCl1 | PCL | 1 passage | 3 passages | 1 passage | 3 passages |
| 35 | 70 | 30 | + | + | + | + |

Exemples 36 & 37 liant à base de PECl 2 / PCL / PE2 - adhésion sur PE & PVDF

| Exemple | Composition du liant | | | Adhésion PE2 | Adhésion PVDF |
|---|---|---|---|---|---|
| | PECl2 | PCL | PE2 | 2 passages | |
| 36 | 73 | 18 | 9 | ++++ | +++ |
| 37 | 67 | 17 | 16 | ++++ | +++ |

Exemples 38 & 39 liant à base de PECl1 / PCL / PE2 - adhésion sur PE & PVDF

| Exemple | Composition du liant | | | Adhésion PE2 | Adhésion PVDF |
|---|---|---|---|---|---|
| | PECl1 | PCL | PE2 | 2 passages | |
| 38 | 64 | 27 | 9 | +++ | ++ |
| 39 | 58 | 25 | 17 | +++ | ++ |

Exemples 40 & 41 liant à base de PECl2 / PCLgGMA - adhésion sur PE & PVDF

| Exemple | Composition du liant | | Adhésion PE2 | Adhésion PVDF |
|---|---|---|---|---|
| | PECl2 | PCLg GMA | 2 passages | |
| 40 | 70 | 30 | ++ | +++ |
| 41 | 80 | 20 | ++ | +++ |

Exemples 42 & 43 liant à base de PECl1 / PCLgGMA - adhésion sur PE & PVDF

| Exemple | Composition du liant | | Adhésion PE2 | Adhésion PVDF |
|---|---|---|---|---|
| | PECl1 | PCL | 2 passages | |
| 42 | 60 | 40 | +++ | +++ |
| 43 | 70 | 30 | +++ | +++ |

Exemple 44 liant à base de PECl 2 / PCLgGMA / PE2 - adhésion sur PE & PVDF

| Exemple | Composition du liant | | | Adhésion PE2 | Adhésion PVDF |
|---|---|---|---|---|---|
| | PECl2 | PCLgGMA | PE2 | 2 passages | |
| 44 | 73 | 18 | 9 | ++++ | ++ |

Exemple 45 liant à base de PECl1 / PCLgGMA / PE2 - adhésion sur PE & PVDF

| Exemple | Composition du liant | | | Adhésion PE2 | Adhésion PVDF |
|---|---|---|---|---|---|
| | PECl1 | PCLgGMA | PE2 | 2 passages | |
| 45 | 64 | 27 | 9 | ++++ | ++ |

**Exemples d'utilisation de matériaux multicouches**

Exemple 46 Complexes PE2 / Liant d'adhésion / PVDF utilisables comme barrière aux essences ou autres fluides :

On réalise un film tricouche PE2 (250 $\mu$m) / Liant (50 $\mu$m) / PVDF (100 $\mu$m) - soit 400 $\mu$m d'épaisseur totale - selon la technique classique de coextrusion au travers d'une filière adaptée. Le liant d'adhésion est constitué de 48 % en masse de PECl2, 39 % de PCL et 13 % de PE2. Le PVDF utilisé est identique à celui des exemples précédents. La perméabilité de cette structure est testée à 23°C dans une cellule étanche par la méthode de perte en poids. L'essence test est initialement au contact de la face PE de la structure.

| Essence Test | Film Monocouche PE2 (400$\mu$m) | Complexe PE2 / Liant / PVDF |
|---|---|---|
| Flux au TF1 (g/m$^2$/24h) | 55 | <1 |
| Flux au M15 (g/m$^2$/24h) | 50 | <1 |
| TF1 = 10% en volume d'éthanol dans un mélange 50/50 de toluène et d'isooctane en volume.<br>M15 = 15% en volume de méthanol dans un mélange 50/50 de toluène et d'isooctane en volume. | | |

Exemple 47 Tubes Coextrudés PEHD / Liant selon l'Invention / PVDF utilisables comme transport d'essences ou autres fluides :

On réalise un tube multicouche de diamètre intérieur 6 mm et de diamètre extérieur 8 mm : couche externe PE2 (750 $\mu$m) / Liant selon l'invention (50 $\mu$m) / couche
interne PVDF (150 $\mu$m) - soit environ 1 mm d'épaisseur totale - selon la technique classique de coextrusion au travers d'une filière adaptée. Le liant d'adhésion est constitué de 60 % en masse de PECl2, 27 % de PCL et 13 % de PE2. Le PVDF est un homopolymère de VF2 de fluidité 13g/10 min mesuré à 230°C sous 5 kg (norme ISO 1133) (KYNAR$^®$ 6000HD).
On teste la permanence de l'adhésion entre les couches après immersion prolongée pendant 15 jours à 23°C d'un tronçon de 100 mm de la structure multicouche définie ci-dessus dans un bocal fermé contenant de l'essence test Fuel C (Fuel C = mélange 50/50 en volume de toluène et d'isooctane) :

|  | Adhésion Avant Immersion | Adhésion Après Immersion |
|---|---|---|
| Coté PEHD | ++++ | + |
| Côté PVDF | ++ | + |

NB on voit que les conditions opératoires de ce test sont beaucoup plus sévères que les conditions d'utilisation d'un tube multicouche pour le transport d'hydrocarbures puisque la couche de liant est exposée directement à l'essence test au niveau de la tranche du tube.

Exemple 48 Flacons coextrudés multicouches PEHD/liant selon l'invention /PVDF/PEHD utilisables comme récipients de stockage ou réservoirs d'essences ou autres fluides

On fabrique un flacon multicouche (4 couches) de volume 500 ml par coextrusionsoufflage au travers d'une filière adéquate.

De l'extérieur vers l'intérieur du flacon les couches sont :

PE1 externe(150 $\mu$m)/ liant selon l'invention (50 $\mu$m)/ PVDF (100 $\mu$m)/ PE1 interne(200 $\mu$m).

Le liant d'adhésion est constitué de 65 % en masse de PECl2, 26 % de PCL et 9 % de PE2. Le PVDF est un homopolymère de VF2 de fluidité 13g/10 min mesuré à 230°C sous 5 kg (norme ISO 1133) (KYNAR[®] 6000HD).

En l'absence de liant entre la couche interne de PE1 et de PVDF, il n'y a aucune adhésion. Grâce à la présence du liant, il existe par contre une adhésion supérieure à 2000 g/cm entre la couche externe de PE1 et celle de PVDF.

Exemples 49 à 52

A) Matériaux utilisés

Le PVDF est un homopolymère de fluidité 20 g/10 min à 230°C sous 5 kg (norme ISO 1133) (KYNAR[®] 9000HD).

Le liant utilisé est un mélange de 80% en masse de PECl2 et de 20% de PCL décrits précédemment.

L'élastomère vulcanisable EPDM1 est une formulation à base de terpolymère oléfinique éthylène-propylène-diène contenant 58% en masse d'éthyléne et 9% de diène (Vistalon[®] 6630) et caractérisé par une Viscosité Mooney ML (1+4) à 125°C de 36. Cet EPDM est vulcanisé par un système classique à base de peroxyde. La formulation contient également 15% de silice comme renforçant.

L'élastomère vulcanisable EPDM2 est à base du même EPDM que la formulation EPDM1, mais le système de vulcanisation est à base de soufre. La formulation contient également 45% de noir de carbone comme renforçant.

L'élastomère thermoplastique oléfinique TPO1 est un mélange majoritaire en poids de polypropylène et d'EPDM vulcanisé (Santoprène[®] 10187).

B) Obtention des complexes Elastomère / Liant / PVDF et Test de Pelage :

A partir de 2 films monocouches de liant et de PVDF d'environ 200 $\mu$m d'épaisseur chacun, on prépare un complexe bicouche par pressage comme décrit précédemment. Une éprouvette de 100 x 40 x 4 mm est alors découpée par emportepièce. Parallèlement, on découpe aussi une ébauche (100 x 40 x 4 mm) de chacun des élastomères décrits sous A dans une plaque.

Chaque multicouche Elastomère / Liant / PVDF est alors placé dans un moule de compression qui est porté à une température suffisante pendant plusieurs minutes pour assurer la fusion du liant ainsi que la vulcanisation éventuelle de l'élastomère.

Une éprouvette tricouche de 25 mm de largeur est alors découpée et 24 heures après, l'adhésion est testée selon la procédure décrite précédemment sur un dynamomètre à une vitesse de 50 mm / min au lieu de 200 mm / min.

C) <u>Tableaux des Résultats</u> :

| Exemple | Elastomère | Liant | Conditions de Pressage | Adhésion | Remarque |
|---------|------------|-------|------------------------|----------|----------|
| 49 | EPDM1 | PCL | 180°C /10 min | 0 | Adhésion nulle côté EPDM |
| 50 | EPDM1 | 80/20 PECl2/PCL | 160°C / 20 min | ++ | Rupture dans l'élastomère |
| 51 | EPDM | 80/20 PECl2/PCL | 160°C / 20 min | ++ | Rupture dans le liant |
| 52 | TPO1 | 80/20 PECl2/PCL | 180°C / 7 min | + | Rupture dans le liant |

## Revendications

1.  Liant d'adhésion de polyoléfines à des polymères fluorés, caractérisé en ce qu'il comprend :

    -   au moins un polyester aliphatique greffé ou non, chaque polyester aliphatique étant constitué par un polymère dérivant d'ester cyclique ou de lactone de formule

    $$\{O{-}R_1{-}CO\}_n$$

    ou par un polymère dérivant de diol et de diacide carboxylique de formule

    $$\{O{-}R_2{-}O{-}CO{-}R_3{-}CO\}_n$$

    dans lesquelles $R_1$, $R_2$, $R_3$ représentent des motifs alkylènes, tout éventuel polyester aliphatique greffé l'étant par au moins un monomère choisi parmi :

    -   les acides carboxyliques insaturés, leurs sels, leurs esters, leurs anhydrides,
    -   les produits insaturés portant des fonctions époxydes,
    -   les esters vinyliques,
    -   le styrène ;

    -   au moins une polyoléfine chlorée dont le taux de chlore est compris entre 10 et 50 % en poids, et
    -   en ce que le rapport massique du ou des polyesters aliphatiques à la ou les polyoléfines chlorées est compris entre 0,05 et 1,20.

2.  Liant d'adhésion selon la revendication 1, caractérisé en ce que le polyester aliphatique est la poly($\varepsilon$-caprolactone) (PCL).

3.  Liant d'adhésion selon la revendication 2, caractérisé en ce que la polyoléfine chlorée est du PE et/ou du PP chlorés et que le rapport massique du PCL sur le PE et/ou le PP chlorés est compris entre 0,10 et 0,45.

4.  Matériaux composites comprenant l'association :

    -   polyoléfine ;
    -   liant tel que défini dans l'une quelconque des revendications 1 à 3 ;
    -   polymère fluoré ;

    et formant des objets tels que films, tubes, flacons, réservoirs multicouches.

5.  Tubes ou réservoirs comprenant - de l'intérieur vers l'extérieur - l'association :

- PVDF
- liant tel que défini dans l'une quelconque des revendications 1 à 3 ;
- PE ;
  ou l'association :
- PE
- liant tel que défini dans l'une quelconque des revendications 1 à 3 ;
- PVDF ;
- liant tel que défini dans l'une quelconque des revendications 1 à 3 ;
- PE.

6. Procédé de fabrication des matériaux composites de la revendication 4 par coextrusion ou coextrusion - soufflage.

7. Procédé de fabrication suivant la revendication 6, caractérisé en ce qu'au moins une couche contient des matériaux rebroyés ou recyclés.

8. Utilisation des matériaux composites de la revendication 4 pour le transport et/ou le stockage d'hydrocarbures.

**Claims**

1. Adhesion binder for polyolefins and fluoropolymers, characterized in that it comprises :

   - at least one grafted or ungrafted aliphatic polyester, each aliphatic polyester consisting of a polymer derived from a cyclic ester or lactone of formula

   $$\{O-R_1-CO\}_n$$

   or of a polymer derived from a diol and from a dicarboxylic acid, of formula

   $$\{O-R_2-O-CO-R_3-CO\}_n$$

   in which $R_1$, $R_2$ and $R_3$ represent alkylene units, any grafted aliphatic polyester being grafted with at least one monomer chosen from:
   - unsaturated carboxylic acids, their salts, their esters and their anhydrides,
   - unsaturated products carrying epoxide functional groups,
   - vinyl esters,
   - styrene;
   - at least one chlorinated polyolefin whose chlorine content is between 10 and 50% by weight, and
   - in that the mass ratio of the aliphatic polyester(s) to the chlorinated polyolefin(s) is between 0.05 and 1.20.

2. Adhesion binder according to Claim 1, characterized in that the aliphatic polyester is poly($\varepsilon$-caprolactone) (PCL).

3. Adhesion binder according to Claim 2, characterized in that the chlorinated polyolefin is chlorinated PE and/or PP and in that the mass ratio of the PCL to the chlorinated PE and/or the chlorinated PP is between 0.10 and 0.45.

4. Composite materials comprising the combination:

   - polyolefin;
   - binder as defined in any one of Claims 1 to 3;
   - fluoropolymer;
     and forming articles such as films, pipes, bottles or multilayer storage containers.

5. Pipes or storage containers including - from the inside outwards - the combination:

   - PVDF
   - binder as defined in any one of Claims 1 to 3;
   - PE;
     or the combination:
   - PE

- binder as defined in any one of Claims 1 to 3;
- PVDF;
- binder as defined in any one of Claims 1 to 3;
- PE.

6. Process for the manufacture of the composite materials of Claim 4 by coextrusion or blow-coextrusion.

7. Manufacturing process according to Claim 6, characterized in that at least one layer contains reground or recycled materials.

8. Use of the composite materials of Claim 4 for conveying and/or storing hydrocarbons.

**Patentansprüche**

1. Klebstoff zum Verbinden von Polyolefinen mit fluorhaltigen Polymeren, dadurch gekennzeichnet, daß er enthält:

- wenigstens einen gepfropften aliphatischen Polyester, wobei jeder aliphatische Polyester aus einem Polymer besteht, das ein Derivat eines cyclischen Esters oder eines Lactons der Formel

$$[O-R_1-CO]_n$$

oder ein von einem Diol und einer Dicarboxylsäure abgeleitetes Polymeres der Formel

$$[O-R_2-O-CO-R_3-CO]_n$$

ist,
wobei $R_1$, $R_2$, $R_3$ Alkylengruppen darstellen, wobei jeder gegebenenfalls gepfropfte aliphatische Polyester mit mindestens einem Monomer ausgewählt aus:

- den ungesättigten Carboxylsäuren, ihren Salzen, ihren Estern, ihren Anhydriden,
- den ungesättigten, Epoxidfunktionen aufweisenden Produkten,
- den Vinylestern,
- Styrol gepfropft ist;

- wenigstens ein chloriertes Polyolefin, dessen Chlorgehalt zwischen 10 und 50 Gew. % beträgt, aufweist und
- das Masseverhältnis des oder der aliphatischen Polyester zu dem oder den chlorierten Polyolefinen zwischen 0,05 und 1,20 beträgt.

2. Klebstoff nach Anspruch 1, dadurch gekennzeichnet, daß der aliphatische Polyester Poly($\varepsilon$-caprolacton) (PCL) ist.

3. Klebstoff nach Anspruch 2, dadurch gekennzeichnet, daß das chlorierte Polyolefin chloriertes PE und/oder PP ist und das Gewichtsverhältnis von PCL zu chloriertem PE und/oder PP zwischen 0,10 und 0,45 liegt.

4. Verbundmaterialien, enthaltend die Kombination von:

- Polyolefin;
- Klebstoff, wie in einem der Ansprüche 1 bis 3 definiert;
- fluorhaltigem Polymer;
die Gegenstände wie mehrschichtige Folien, Rohre, Flaschen oder Behältnisse bilden.

5. Rohre oder Behältnisse, die - von innen nach außen - die Kombination:

- PVDF
- Klebstoff, wie in einem der Ansprüche 1 bis 3 definiert;
- PE;
oder die Kombination:
- PE
- Klebstoff, wie in einem der Ansprüche 1 bis 3 definiert;

- PVDF;
- Klebstoff wie in einem der Ansprüche 1 bis 3 definiert;
- PE
  enthalten.

6. Verfahren zur Herstellung von Verbundmaterialien nach Anspruch 4 durch Koextrusion oder Koextrusionsblasformen.

7. Verfahren zur Herstellung nach Anspruch 6, dadurch gekennzeichnet, daß wenigstens eine Schicht zermahlene oder wiederverwertete Materialien enthält.

8. Verwendung der Verbundmaterialien nach Anspruch 4 für den Transport und/oder die Lagerung von Kohlenwasserstoffen.